# FASCICULE DE BREVET EUROPEEN

(11) **EP 1 047 485 B1**
(45) Date de publication et mention de la délivrance du brevet: **15.03.2006**
(21) Numéro de dépôt: 99956060.0
(22) Date de dépôt: 16.11.1999
(51) Int. Cl.: B01D 29/11, B01D 29/96

(54) **FILTRE AVEC CARTOUCHE DE FILTRATION ET JOINT D'ETANCHEITE**
FILTER MIT FILTERPATRONE UND DICHTUNGSANORDNUNG
FILTER WITH FILTERING CARTRIDGE AND SEALING JOINT

(30) Priorité: 16.11.1998 FR 9814514
(43) Date de publication de la demande: 02.11.2000
(73) Titulaire: FLEETGUARD, 29556 Quimper Cédex 9 (FR)
(72) Inventeur: LE ROUX, Benoît, F-29170 Fouesnant (FR); LE MEN, Gildas, F-29000 Quimper (FR); GUICHAOUA, Jean-Luc, F-29120 Combrit (FR)
(74) Mandataire: Vidon, Patrice
(86) Numéro de dépôt international: PCT/FR1999/002811
(87) Numéro de publication internationale: WO 2000/029091

(56) Documents cités:
- DE-C- 4 325 997

## Description

L'invention concerne le domaine de la conception et de la réalisation des cartouches de filtrage utilisées dans les filtres pour liquides circulant des les moteurs ou les équipements hydrauliques.

Ces cartouches de filtrage présentent généralement une forme cylindrique et sont constituées par un médium de filtration, pouvant par exemple être en papier, en carton ou encore en feutre, auquel sont solidarisées deux flasques d'extrémité. La tendance actuelle est de réaliser de telles cartouches de filtrage en matériaux incinérables. Notamment, en ce qui concerne les flasques, la tendance actuelle est à la réalisation de flasques en matière plastique.

De telles cartouches de filtrage sont montées à l'intérieur des cuves de filtre et, dans de nombreux cas, de façon à coopérer avec un tube central de celles-ci. Ce tube central peut être en une partie ou en deux parties. Afin d'assurer l'étanchéité lors de la filtration, des joints circulaires en matière plastique sont disposés entre ce tube central et les flasques.

Les joints d'étanchéité de l'état de la technique sont montés comprimés de façon à assurer correctement leur fonction. Toutefois, si une telle compression ne pose aucun problème avec les pièces métalliques, on a constaté qu'elle pouvait conduire à une dégradation de l'étanchéité dans le temps dans le cadre de l'utilisation de flasques en matière plastique.

C'est l'objectif principal de la présente invention de proposer des moyens d'étanchéité pour cartouches de filtrage ne présentant pas cet inconvénient et permettant donc d'assurer une bonne étanchéité même avec les pièces en matière plastique.

Notamment, un objectif de la présente invention est de présenter de tels moyens qui autorisent une adaptation aux évolutions de dimensions entre le flasque d'extrémité et le tube central de la cuve.

Ces différents objectifs sont atteints grâce à l'invention qui concerne un ensemble constitué par une cartouche de filtrage, un joint d'étanchéité et un filtre selon la revendication 1.

Le conduit de mise en pression de l'intérieur de la cavité, permet de plaquer le joint d'étanchéité contre le tube central lors du fonctionnement du filtre et ainsi d'assurer une parfaite étanchéité, quelle qu'ait été l'évolution du jeu entre le flasque et le tube. Le joint peut être monté avec une compression initiale faible (on notera que la compression initiale est indépendante des performances du joint) et le joint peut travailler à de fortes pressions.

On comprendra que le conduit de mise en pression pourra être réalisé de différentes manières dans le flasque d'extrémité. Selon une variante préférentielle, ce conduit se présente sous la forme d'une pluralité d'encoches, avantageusement équiréparties sur le bord intérieur de ce flasque.

La cavité citée ci-dessus destinée à accueillir le joint d'étanchéité pourra également être réalisée de plusieurs façons. Cette cavité offre notamment l'avantage de faciliter l'extraction du joint avec le filtre. Selon une variante particulièrement intéressante, ladite partie faisant saillie comprend une première portion circulaire essentiellement parallèle à l'axe longitudinal de ladite cartouche prolongée par au moins une seconde portion essentiellement perpendiculaire à ladite première portion. On comprendra que, dans ce mode de réalisation, la première portion et la seconde portion sont formées monobloc. La cavité ainsi définie permettra de prépositionner facilement le joint d'étanchéité à l'intérieur de celle-ci sans lui permettre d'en sortir facilement. Un tel prépositionnement facilitera le montage de l'ensemble constitué par la cartouche et le joint d'étanchéité. Cette cavité permettra également d'extraire facilement l'ensemble filtre-joint de la cuve, sans risque que le joint reste dans celle-ci.

Bien que la deuxième portion de la partie faisant saillie délimitant la cavité pourra être continue sur tout le pourtour de la première portion, selon une variante préférentielle, cette seconde portion sera constituée par une pluralité d'ergots avantageusement équirépartis sur le pourtour de la première portion circulaire.

Selon une autre variante, la cavité pourra aussi être définie par une première portion circulaire essentiellement parallèle à l'axe longitudinal de la cartouche d'une part et par un élément circulaire pouvant être solidarisé, par exemple pas soudage, notamment soudage par ultra-sons, encliquetage ou tout autre moyen sur la portion circulaire en question d'autre part. Un tel élément circulaire pourra présenter dans certains modes de réalisation au moins un orifice.

L'invention, ainsi que les différents avantagés qu'elle présente seront plus facilement compris grâce à la description qui va suivre de deux modes de réalisation de celle-ci en référence aux dessins dans lesquels :
- la figure 1 représente une vue en coupe transversale d'un premier mode de réalisation d'un ensemble cartouche de filtrage - joint d'étanchéité monté sur le tube central en deux parties d'une cuve de filtration ;
- la figure 2 représente une vue en perspective du flasque d'extrémité de la cartouche de filtrage représentée à la figure 1 ;
- la figure 3 représente un deuxième mode de réalisation d'un ensemble cartouche de filtrage - joint d'étanchéité monté sur le tube central en une partie d'une cuve de filtration ;
- la figure 4 représente une vue partielle agrandie en coupe du flasque d'extrémité et du joint d'étanchéité montrés à la figure 3 ;

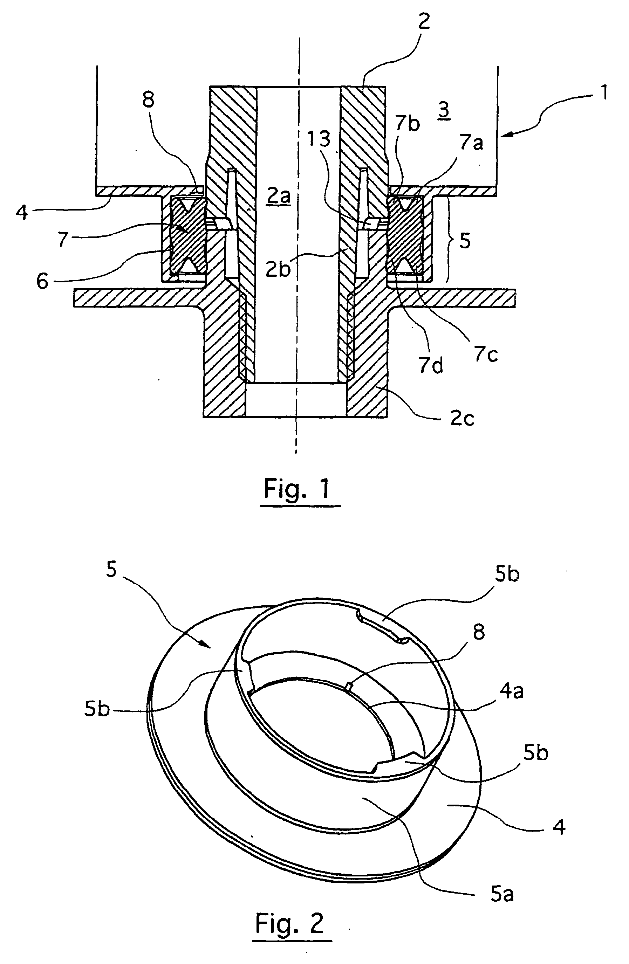

En référence à la figure 1, une cartouche de filtrage 1 est représentée en coupe montée sur le tube central 2 d'un filtre constitué par une partie supérieure 2b et une cheminée 2c. Un orifice de vidange 13 est défini entre les parties 2b et 2c. Cette cartouche, représentée partiellement, intègre un médium de filtration 3 et un flasque d'extrémité 4.

Selon la présente invention, ce flasque d'extrémité est pourvu d'une partie faisant saillie 5 définissant une cavité 6 à l'intérieur de laquelle peut être placé un joint d'étanchéité 7.

Dans le cadre du présent mode de réalisation, ce joint d'étancheité 7 présente une section transversale essentiellement en "X" et est pourvu de 4 lobes 7a, 7b, 7c, 7d définissant 3 zones, à savoir une zone supérieure entre les lobes 7a et 7b, une zone inférieure entre les lobes 7d et 7c et une zone latérale entre les lobes 7b et 7d.

Conformément à la présente invention, le flasque 4 est pourvu d'un conduit de mise sous pression 8 qui sera décrit plus en détail en référence à la figure 2.

En référence à la figure 2, la partie faisant saillie 5 du flasque d'extrémité 4 est constituée d'une première portion 5a essentiellement parallèle à l'axe longitudinal de la cartouche de filtrage et d'une deuxième portion constituée par une pluralité d'ergots 5b perpendiculaires à la première portion. Ces ergots 5b permettent de maintenir en position un joint de filtration positionné à l'intérieur de la cavité 6 qu'il délimite comme représenté sur la figure 1.

Grâce à une telle architecture d'extrémité de flasque, il est possible de prépositionner un joint à l'intérieur du flasque. Cette architecture présente également l'avantage d'être facilement moulable en une seule pièce.

Comme on peut le voir également sur la figure 2, le conduit de mise sous pression est constitué par 3 encoches 8 équiréparties sur le pourtour intérieur 4a du flasque 4.

Lors de la mise sous pression du filtre, le liquide sous pression transite par le médium 3 de la cartouche de filtrage 1 et passe dans la lumière 2a du tube central grâce à des orifices (non représentés). Le fluide récupéré dans cette lumière est débarrassé de ses impuretés. Lors de cette opération de filtration, une petite partie du fluide sous pression pénètre par les encoches 8 dans la cavité 6 et plus précisément dans la zone supérieure délimitée par les lobes 7a, 7b du joint d'étanchéité 7 présentant une section en "X". Le fluide sous pression arrive également par le bas du filtre dans la zone inférieure de la cavité 6 délimitée par les lobes 7c et 7d. Une telle introduction de fluide met le joint en pression et permet de plaquer les lobes 7b et 7d de celui-ci contre le tube central 2 et les lobes 7a et 7c contre la paroi intérieure de la partie saillie 5. Cette déformation du joint permet d'assurer une parfaite étanchéité avec l'orifice de vidange 13 en regard de la zone latérale délimitée entre les lobes 7b et 7d et d'éviter toute fuite entre les trois zones de réception de fluides définies entre les lobes 7a,7b (zone supérieure), 7c,7d (zone inférieure) et 7b,7d (zone latérale).

Dans ce mode de réalisation, la partie faisant saillie 5 du flasque d'extrémité 4 est constituée monobloc c'est-à-dire que les portions 5a et 5b sont moulées en une seule pièce avec le flasque d'extrémité 4 lui-même.

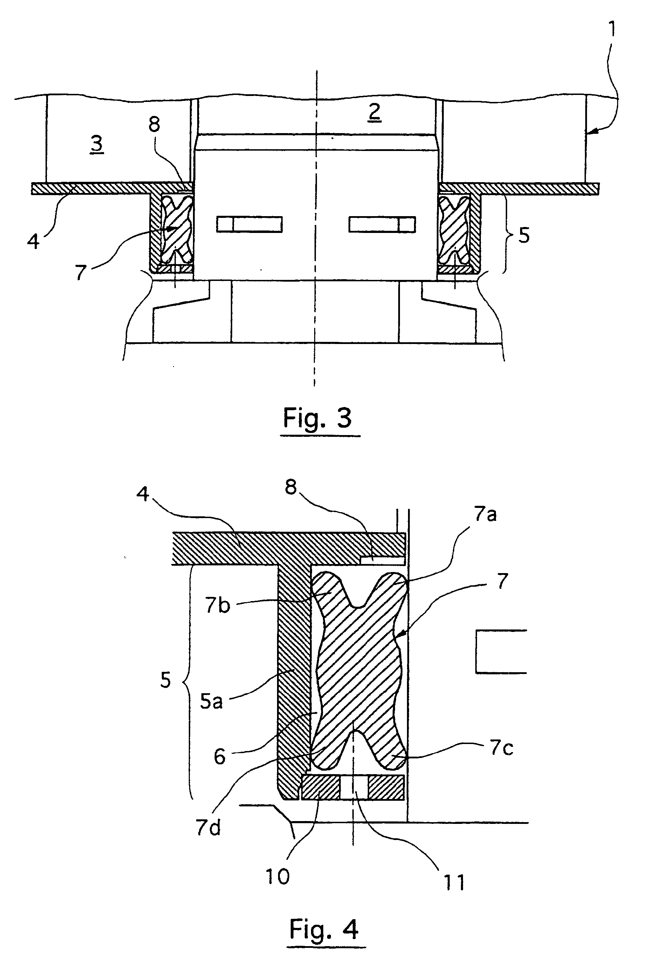

Dans le mode de réalisation représenté en figure 3 et en figure 4, le flasque d'extrémité 4 est pourvu d'une portion faisant saillie 5 constituée de deux éléments distincts.

En référence à la figure 4 cette partie faisant saillie comprend une première portion 5a formée monobloc avec le flasque d'extrémité 4 et un élément d'extrémité 10 soudée aux ultra-sons sur cette portion 5a et présentant une fente 11. L'élément circulaire 10 permet d'emprisonner à l'intérieur de la cavité 6 le joint d'étanchéité 7 à 4 lobes 7a, 7b, 7c, 7d.

Les modes de réalisation de l'invention ici décrits n'ont pas pour objectif de réduire la portée de celle-ci. En conséquence, il pourra y être apporté de nombreuses modifications sans sortir de son cadre, défini par les revendications.

## Revendications

1. Ensemble de filtration constitué par :
- une cartouche de filtrage présentant un medium de filtration (3) et au moins un flasque d'extrémité (4) solidarisé audit medium de filtration, ledit flasque d'extrémité (4) étant prolongé par une partie faisant saillie (5) délimitant une cavité (6) destinée à accueillir un joint d'étanchéité (7),
- un joint d'étanchéité (7) coopérant avec ladite cartouche de filtrage;
- un filtre pour liquide circulant dans un moteur ou un équipement hydraulique dont la cuve présente un tube central (2) sur lequel ladite cartouche et ledit joint (7) sont montés;
**caractérisé en ce que** :
- ladite partie faisant saillie (5) comprend une première portion circulaire (5a) essentiellement parallèle à l'axe longitudinal de ladite cartouche prolongée radialement vers l'intérieur par au moins une seconde portion (5b) essentiellement perpendiculaire à ladite première portion (5a) permettant de maintenir en position ledit joint d'étanchéité (7) positionné à l'intérieur de la cavité (6)
- ladite cavité (6) est définie par une portion du flasque d'extrémité (4), une portion du tube central (2), ladite première portion circulaire (5a) et ladite seconde portion (5b) ;
- ledit joint (7) présente une section transversale essentiellement en "X" définissant quatre lobes (7a, 7b, 7c, 7d), à savoir deux lobes supérieurs (7a, 7b) et deux lobes inférieurs (7c, 7d) ;
- ladite cavité présente une ouverture supérieure prévue entre le flasque d'extrémité (4) et le tube central (2) et est pourvue d'au moins un conduit (8) pour permettre un passage pour un fluide de ladite ouverture supérieure vers l'espace entre lesdits lobes supérieurs (7a,7b);
- la cavité est dimensionnée de façon telle que, avant l'usage du filtre, lesdits lobes 7b, 7d touchent déjà le tube central (2) et lesdits lobes 7a, 7c touchent ladite première portion circulaire (5a).

2. Ensemble selon la revendication 1 **caractérisé en ce que** ledit flasque d'extrémité (4) présente une pluralité d'encoches (8) formant conduits de mise en pression avantageusement équiréparties sur le bord intérieur (4a) dudit flasque d'extrémité.

3. Ensemble selon la revendication 2 **caractérisé en ce qu'**elle présente une pluralité d'ergots (5b) équirépartis sur le pourtour de ladite première portion circulaire (5a), lesdits ergots formant ladite seconde portion de ladite partie faisant saillie.

4. Ensemble selon la revendication 1 ou 2 **caractérisé en ce que** ladite partie faisant saillie (5) comprend une portion circulaire (5a) essentiellement parallèle à l'axe longitudinal de ladite cartouche et un élément circulaire (10) solidarisé à ladite portion circulaire.

5. Ensemble selon la revendication 4 **caractérisé en ce que** ledit élément circulaire (10) présente au moins un orifice (11).

## Patentansprüche

1. Filtervorrichtung, die besteht aus:
- einer Filterpatrone, die ein Filtermedium (3) und wenigstens einen Endflansch (4) aufweist, der mit besagtem Filtermedium verbunden ist, wobei besagter Endflansch (4) durch einen vorspringenden Teil (5) verlängert ist, der einen Hohlraum (6), der dazu bestimmt ist, eine Dichtungsanordnung (7) aufzunehmen, abgrenzt;
- einer Dichtungsanordnung (7), die mit besagter Filterpatrone zusammenwirkt;
- einem Filter für eine Flüssigkeit, die in einem Motor oder einer hydraulischen Einrichtung zirkuliert, dessen Gehäuse ein zentrales Rohr (2) aufweist, an das besagte Patrone und besagte Dichtung (7) montiert sind;
**dadurch gekennzeichnet, dass**:
- besagter vorspringender Teil (5) ein erstes ringförmiges Stück (5a) umfasst, das im Wesentlichen parallel zur Längsachse besagter Patrone ist, das radial nach Innen von wenigstens einem zweiten Stück (5b) verlängert wird, das im Wesentlichen zu besagtem ersten Stück (5a) senkrecht ist, das es ermöglicht, besagte Dichtungsanordnung (7), die im Innern des Hohlraums (6) positioniert ist, in Position zu halten;
- besagter Hohlraum (6) durch ein Stück des Endflansches (4), ein Stück des zentralen Rohrs (2), besagtes erstes kreisförmiges Stück (5a) und besagtes zweites Stück (5b) definiert ist;
- besagte Dichtung (7) einen Querschnitt im Wesentlichen als "X" aufweist, das vier Lappen (7a, 7b, 7c, 7d) definiert, nämlich zwei obere Lappen (7a, 7b) und zwei untere Lappen (7c, 7d);
- besagter Hohlraum eine obere Öffnung aufweist, die zwischen dem Endflansch (4) und dem zentralen Rohr (2) vorgesehen ist und die mit wenigstens einem Kanal (8) versehen ist, um einen Durchgang für eine Flüssigkeit von besagter oberer Öffnung zu dem Raum zwischen besagten oberen Lappen (7a, 7b) zu ermöglichen;
- der Hohlraum derart dimensioniert ist, dass vor dem Gebrauch des Filters besagte Lappen 7b, 7d das zentrale Rohr (2) bereits berühren und besagte Lappen 7a, 7c besagtes erstes ringförmiges Stück (5a) berühren.

2. Vorrichtung gemäß Anspruch 1, **dadurch gekennzeichnet, dass** besagter Endflansch (4) eine Vielzahl von Kerben (8) aufweist, die Kanäle zum Unterdrucksetzen bilden, die vorteilhafterweise auf dem inneren Rand (4a) besagten Endflansches gleichmäßig verteilt sind.

3. Vorrichtung gemäß Anspruch 2, **dadurch gekennzeichnet, dass** sie eine Vielzahl von Nasen (5b) aufweist, die auf dem Umfang besagten ersten ringförmigen Stücks (5a) gleichmäßig verteilt sind, wobei besagte Nasen besagtes zweites Stück des besagten vorspringenden Teils bilden.

4. Vorrichtung gemäß Anspruch 1 oder 2, **dadurch gekennzeichnet, dass** besagter vorspringender Teil (5) ein ringförmiges Stück (5a), das im Wesentlichen parallel zur Längsachse besagter Patrone ist, und ein ringförmiges Element (10), das mit besagtem ringförmigem Stück verbunden ist, umfasst.

5. Vorrichtung gemäß Anspruch 4, **dadurch gekennzeichnet, dass** besagtes ringförmiges Element (10) wenigstens eine Öffnung (11) umfasst.

## Claims

1. Filtration assembly formed by:
- a filtering cartridge having a filtration medium (3) and at least one end disc (4) joined to the said filtration medium, the said end disc (4) being extended by a projecting part (5) delimiting a cavity (6) intended to receive a seal (7),
- a seal (7) cooperating with the said filtering cartridge;
- a filter for liquid circulating in a hydraulic motor or hydraulic equipment, the tank of which has a central tube (2) on which the said cartridge and the said seal (7) are mounted;
**characterised in that**:
- the said projecting part (5) comprises a first circular portion (5a) essentially parallel to the longitudinal axis of the said cartridge, extended radially inwards by at least one second portion (5b) essentially perpendicular to the said first portion (5a) making it possible to hold in place the said seal (7) positioned inside the cavity (6),
- the said cavity (6) is defined by a portion of the end disc (4), a portion of the central tube (2), the said first circular portion (5a) and the said second portion (5b);
- the said seal (7) has a cross-section essentially in the shape of an "X" defining four lobes (7a,7b,7c,7d), namely two upper lobes (7a, 7b) and two lower lobes (7c, 7d);
- the said cavity has an upper opening provided between the end disc (4) and the central tube (2) and is provided with at least one conduit (8) for making it possible for a fluid to pass from the said upper opening to the space between the said upper lobes (7a, 7b);
- the cavity is dimensioned such that, prior to use of the filter, the said lobes (7b, 7d) are already touching the central tube (2) and the said lobes (7a, 7c) are touching the said first circular portion (5a).

2. Assembly according to Claim 1, **characterised in that** the said end disc (4) has a plurality of notches (8) forming pressurising conduits, which notches are advantageously distributed equally over the inner border (4a) of the said end disc.

3. Assembly according to Claim 2, **characterised in that** it has a plurality of lugs (5b) distributed equally over the circumference of the said first circular portion (5a), the said lugs forming the said second portion of the said projecting part.

4. Assembly according to Claim 1 or 2, **characterised in that** the said projecting part (5) comprises a circular portion (5a) essentially parallel to the longitudinal axis of the said cartridge and a circular element (10) joined to the said circular portion.

5. Assembly according to Claim 4, **characterised in that** the said circular element (10) has at least one orifice (11).
